# EUROPEAN PATENT SPECIFICATION

(11) **EP 4 025 794 B1**
(45) Date of publication and mention of the grant of the patent: **26.07.2023**
(21) Application number: 19787492.8
(22) Date of filing: 05.09.2019
(51) Int. Cl.: F16C 27/02, F16C 27/06, F16C 32/06, F16C 33/22, F16C 39/04, F16C 41/00, F16C 41/02

(54) **FLUID BEARING**
FLUIDLAGER
PALIER FLUIDE

(43) Date of publication of application: 13.07.2022
(73) Proprietor: Delft Offshore Turbine B.V., 2611 WP Delft (NL)
(72) Inventor: NIJSSEN, Joep Peter Abram, 2611 WP Delft (NL); VAN OSTAYEN, Ronald Adrianus Johannes, 2611 WP Delft (NL)
(74) Representative: V.O.
(86) International application number: PCT/NL2019/050579
(87) International publication number: WO 2021/045611

(56) References cited:
- US-A- 2 069 367
- US-A- 5 932 049

## Description

The invention relates to fluid bearings. Fluid bearings in general are known from practice and can be used to reduce friction, in particular sliding friction, in particular between a first and a second bearing surface. Known fluid bearings have either a low deformability or a low load capacity, wherein increasing the deformability generally leads to decreasing the load capacity. This makes them unsuitable for situations where a combination of high deformability and high load capacity is required. In such situations sometimes other types of bearings are therefore used, which however have disadvantages such as low durability and high maintenance effort. It is desired for bearings to require little maintenance. This applies generally, but more particularly in case of bearings which are hard to access for maintenance crew, e.g. bearings in difficult-to-access, e.g. offshore, structures such as wind turbine nacelles.

It is therefore an object of the present disclosure to provide an improved fluid bearing, in particular a fluid bearing which combines high deformability with high load capacity. A bearing of this ype is known for example from US 5 932 049 A.

Further objects of the disclosure are:
to provide an improved method for reducing friction between at least a first and a second machine part; and to provide an improved pump for a wind turbine.

In the present disclosure in one aspect a fluid bearing is described which is configured to reduce, during use, friction between a first and a second bearing surface, the bearing comprising at least two deformable pressure chambers, each pressure chamber being independently fluidly connected to the first bearing surface for receiving an operating fluid.

It has been found through modeling and experimentation that such a fluid bearing can provide a combination of high deformability with high load capacity during operation, compared to known bearings. In particular, the deformable pressure chambers can provide deformability of the bearing, while being able to provide load capacity substantially irrespective of their deformation.

In an embodiment, the chambers are configured, during use, to be filled with the operating fluid and preferably to be pressurized by the operating fluid.

Such filling and preferred pressurizing can provide increased load capacity compared to known fluid bearings with a similarly high deformability. Since the pressure chambers are fluidly connected to the first bearing surface, a pressurizing of the operating fluid at the first bearing surface (in particular between the first and second bearing surfaces) can cause a substantially corresponding pressurization of the pressure chambers. Thus, an operating fluid pressure in the pressure chambers can substantially correspond to an operating fluid pressure at the first bearing surface.

In an embodiment, at least one, preferably each, of the deformable pressure chambers extends next to another of the deformable pressure chambers, in particular viewed in a direction which extends parallel to the first bearing surface.

In this way, a static balancing behavior between the pressure chambers can be achieved under the influence of a loading of the bearing which loading is asymmetric along said direction.

In an embodiment, at least two, preferably all, of the deformable pressure chambers are spaced apart from each other, in particular viewed in a direction which extends parallel to the first bearing surface.

In this way, the above-mentioned static balancing behavior can be more pronounced.

The deformable pressure chambers can be defined by respective deformable walls. For example, in an embodiment, the deformable pressure chambers are each bordered (i.e. defined) by one or more deformable walls, wherein the one or more deformable walls preferably include one or more deformable partition walls which each separate at least one pressure chamber from at least one other pressure chamber. The deformable walls may e.g. be flexible walls, for example made of elastic material (e.g. rubber or a rubber-like material). In an embodiment, as will be appreciated by the skilled person, such deformable elastic walls will provide a form of stiffness perpendicular to a load carry direction e.g. to prevent kinking of the walls.

Such walls provide efficient and effective means for forming the deformable pressure chambers. In particular, the walls can provide deformability while helping to contain operating fluid within the pressure chambers.

In an embodiment, the bearing comprises more than two, preferably at least four, more preferably at least six, more preferably at least ten deformable pressure chambers which are preferably distributed substantially evenly throughout the bearing, in particular throughout a substantially deformable bearing body of the bearing.

A higher number of pressure chambers can provide a more homogeneous deformability and/or a more homogeneous load balancing, in particular in the case of more complex deformations (e.g. in case of a more irregular second bearing surface).

In an embodiment, the bearing comprises an even number of substantially deformable pressure chambers which are preferably distributed substantially symmetrically with respect to a central axis of the bearing which axis extends substantially perpendicular to the first bearing surface, in particular with respect to a plane which includes the central axis.

Such a configuration can provide a substantially symmetric deformability and/or a substantially symmetric load capacity of the bearing, which can be particularly advantageous in case of a similarly symmetrically varying second bearing surface.

In an embodiment, the pressure chambers are at least partially formed in a substantially deformable (elastic) bearing body, wherein the bearing body is substantially elastic and preferably has a substantially high strain capacity. The bearing body is preferably substantially, e.g. at least 90%, composed of rubber and/or a rubber-like material, in particular a high-strain material. In a further embodiment, a Young's Modulus of the bearing body preferably varies along one or more spatial dimensions of the bearing body.

Such a deformable bearing body can provide an advantageous combination of deformability and strength, in particular of the pressure chambers.

In an embodiment, the bearing includes a force distributer which is configured to distribute a force received by the bearing substantially evenly over the bearing, in particular over the pressure chambers, wherein the force distributer is preferably substantially stiff compared to the pressure chambers, wherein the force distributer preferably consists of or includes at least 50%, preferably at least 90% steel, for example stainless steel, wherein the pressure chambers are preferably arranged between the force distributer and the first bearing surface.

The force distributer can help, during operation, to distribute a load over the bearing and/or to smoothen a deformation of the bearing.

In an embodiment, the first bearing surface is substantially deformable, in particular compared to the second bearing surface.

Such a first bearing surface can provide improved conformance of the first bearing surface to the second bearing surface and load balancing in the bearing.

In an embodiment, the first bearing surface includes a recess which is spaced apart from an outer edge of the first bearing surface, wherein the recess is preferably configured for receiving the operating fluid during operation, wherein preferably the deformable pressure chambers are each independently fluidly connected to the recess.

Such a recess can provide an improved pressure profile of the operating fluid with respect to the first bearing surface, thus improving the friction reducing and load balancing behavior of the bearing. Also, in such a configuration, operating fluid can advantageously flow through the recess during operation, in particular substantially independently to and from each pressure chamber.

In an embodiment, the first bearing surface includes a substantially deformable landing plate.

Such a landing plate can provide improved mechanical properties of the first bearing surface, in particular improved durability and/or reduced resistance to sliding. In this way, a favorable tribological material combination can be provided in the bearing.

In an embodiment, the landing plate has a substantially lower elasticity than a said deformable (elastic) bearing body. Good results can be achieved in case the landing plate has a substantially high ratio of yield stress to Young's Modulus. Also, good results can be achieved in case the landing plate consist of or is substantially, e.g. at least 90%, composed of titanium, in particular grade 5 titanium, and/or spring steel, and/or another high yield-to-Young's-Modulus-ratio metal.

Such a landing plate can provide the above-mentioned improved mechanical properties.

In an embodiment, at least one, preferably each, of the deformable pressure chambers is provided with a respective external fluid inlet for receiving operating fluid directly, e.g. from a fluid supply, wherein the external fluid inlet preferably includes a respective flow restrictor for restricting a flow through the external fluid inlet.

Operating fluid can thus advantageously be supplied more directly to the pressure chambers, e.g. for filling and possibly pressurizing said chambers while operating fluid pressure between the first and second bearing surfaces is low.

In an embodiment, at least one, preferably each, of the deformable pressure chambers comprises a plurality of chamber compartments which are fluidly interconnected through respective interconnecting fluid channels, wherein the chamber compartments are preferably distributed substantially evenly, in particular viewed along a direction which is perpendicular to the first bearing surface.

Such pressure chambers can provide improved distribution of operating fluid pressure within the bearing.

In an embodiment, the bearing is configured such that, when the bearing is not in use and when the first bearing surface is not in contact with the second bearing surface, the first bearing surface is substantially curved, in particular being convex or concave, in particular to substantially matingly conform to a curvature, for example a minimum curvature, of the second bearing surface.

This can reduce a required amount of deformability of the bearing in case of a curved second bearing surface. For example, an offset deformation with respect to a theoretical non-curved first bearing surface can be taken into account, resulting e.g. in a more durable and/or compact bearing.

In an embodiment, the fluid bearing further is provided with a fluid supply for supplying the operating fluid, for example to a fluid inlet of the bearing, and/or for pressurizing said fluid, for example at said fluid inlet, wherein the operating fluid supply preferably includes a fluid pump and optionally a reservoir for holding a buffer volume of said fluid.

Such a fluid supply can advantageously provide pressurization of the fluid bearing including the pressure chambers.

In an aspect of the present disclosure a method is provided for reducing friction between at least a first and a second machine part, wherein the second machine part includes a second bearing surface.

The method comprises providing a fluid bearing including at least two deformable pressure chambers and a first bearing surface, in particular a fluid bearing according to the present disclosure.

The method further comprises: connecting the first bearing surface to the first machine part; and supplying an operating fluid to the bearing, in particular to a fluid inlet of the bearing, thereby pressurizing the deformable pressure chambers and an area between the first and second bearing surfaces, wherein fluid flow is allowed between each of the chambers on the one hand and the area between the bearing surfaces on the other hand.

Such a method can provide the above-mentioned advantages.

In aspects of the present disclosure a wind turbine and a pump for a wind turbine are provided.

The wind turbine comprises a tower and a head mounted at an upper end of said tower, rotational around a head axis, wherein a propeller is mounted to said head, rotatable around a propeller axis, wherein a hydraulic pump is provided, driven by said propeller, wherein the hydraulic pump is provided substantially in the propeller.

The pump is a multi piston pump, comprising a central part and a drive ring extending around the central part, wherein the central part comprises a series of radially outward facing cylinders with pistons movable in said cylinders in said radial direction, relative to a central axis, wherein the drive ring engages the pistons directly or indirectly for at least forcing pistons radially inward.

The drive ring comprises an inward facing, non-circular, e.g. elliptic, surface, engaging the pistons directly or indirectly.

Between the inward facing surface of the drive ring and each piston at least one fluid bearing is provided, in particular a fluid bearing according to the present disclosure, during use driving the pistons.

Such a wind turbine can require less maintenance and/or be more compact and/or more efficient compared to known wind turbines. In particular, the pump of the turbine can cope with large loads while the bearings can provide appropriate deformability with respect to the non-circular surface.

The pump is preferably configured such that operating fluid for the fluid bearings is supplied to the fluid bearings at least partially by said radially inward forcing of respective pistons.

Such a configuration can provide a compact and efficient pump and wind turbine, since power for driving the fluid bearings is supplied directly by the pump which includes the fluid bearings (as opposed to, for example, a separate power supply which could require additional infrastructure, maintenance, etc.).

The invention can for example be applied in a wind turbine and pump known from WO2018226100A1, the teachings of which document are included herein by reference.

In the following, the invention will be explained further using exemplary embodiments and drawings. In the drawings:
Fig. 1a shows a cross section of a fluid bearing according to an embodiment, wherein the bearing is in a substantially unloaded state;
Fig. 1b shows a cross section of the fluid bearing of Fig. 1a, wherein the bearing is in a partially loaded state;
Fig. 1c shows a cross section of the fluid bearing of Figs. 1a and 1b, wherein the bearing is in a substantially loaded state;
Fig. 2a shows a cross section of a fluid bearing according to a further embodiment along the line II-II in Fig. 2b;
Fig. 2b shows a bottom view of the fluid bearing of Fig. 2a;
Fig. 3a shows a cross section view of a fluid bearing according to yet a further embodiment;
Fig. 3b shows a perspective view of the fluid bearing of Fig. 3a, wherein, in Fig. 3b, the second bearing surface is not shown;
Fig. 4 shows a cross section view of a fluid bearing according to yet a further embodiment;
Fig. 5 shows a cross section view of a fluid bearing according to yet a further embodiment;
Fig. 6 shows partially cross sectional a side view of an exemplary multi-piston hydraulic pump for a wind turbine;
Fig. 7 shows a diagram of an exemplary fluid bearing provided with a fluid supply;
Fig. 8 shows an exemplary wind turbine which includes the exemplary pump of Fig. 6; and
Fig. 9 shows a cross section of a fluid bearing according to yet a further embodiment.

The drawings are schematic. In the drawings, similar or corresponding elements have been provided with similar or corresponding reference signs.

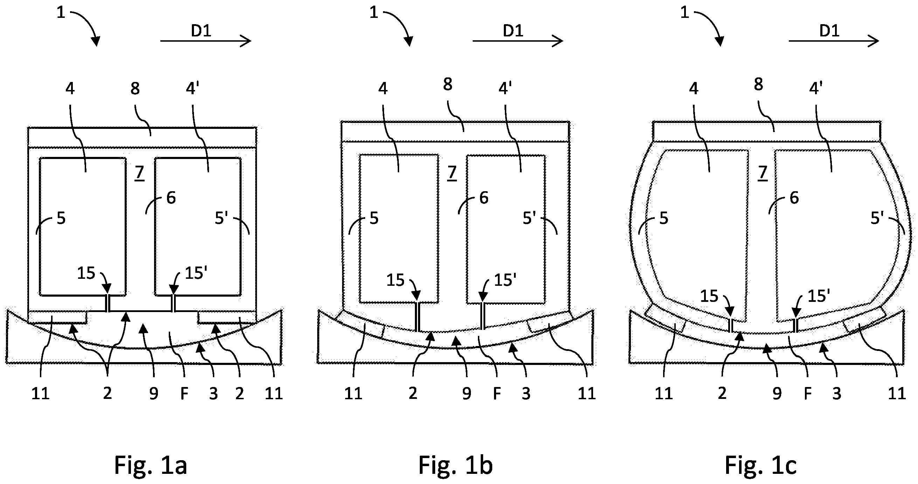

Figs. 1a-1c show a fluid bearing 1 according to an embodiment. The fluid bearing 1 is configured to reduce, during use, friction between a first 2 and a second 3 bearing surface, the bearing 1 comprising at least two deformable pressure chambers 4, 4', each pressure chamber being independently fluidly connected to the first bearing surface 2 for receiving an operating fluid.

The second bearing surface 3 may be a curved surface, in particular having a variable curvature, which may prompt a requirement for deformability of the bearing 1.

The chambers 4, 4' may be configured, during use, to be filled with the operating fluid and preferably to be pressurized by the operating fluid.

An operating fluid, e.g. water, may be provided at the first bearing surface 2, in particular between the first and second bearing surfaces 2, 3 for reducing friction between the first and second bearing surfaces 2, 3. Substantially the same operating fluid may be received in the pressure chambers 4, 4', in particular for pressurizing the pressure chambers 4, 4' while maintaining deformability of the fluid bearing 1, for example through release of operating fluid from the pressure chambers 4, 4'.

In embodiments, at least one, preferably each, of the deformable pressure chambers 4, 4' extends next to another of the deformable pressure chambers, in particular viewed in a direction D1 which extends parallel to the first bearing surface 2.

In this way, a static balancing behavior between the pressure chambers can be achieved under the influence of a loading of the bearing which loading is asymmetric along said direction.

In embodiments, at least two, preferably all, of the deformable pressure chambers 4, 4' are spaced apart from each other, in particular viewed in a direction D1 which extends parallel to the first bearing surface 2.

In this way, the above-mentioned static balancing behavior can be more pronounced.

As follows from the drawing, the deformable pressure chambers 4, 4' may each be bordered by (i.e. defined by) one or more deformable walls 5, 5', wherein the one or more deformable walls preferably include one or more deformable partition walls 6, 6' which each separate at least one pressure chamber 4 from at least one other pressure chamber 4', wherein the deformable walls 5, 5' are preferably substantially elastic (i.e. made of elastic material, as is mentioned before)..

Such walls provide efficient and effective means for forming the deformable pressure chambers. In particular, the walls can provide deformability while helping to contain operating fluid within the pressure chambers.

Figs. 1a-1c show the fluid bearing 1 in different states, in particular with respect to a loading of the bearing 1.

In Fig. 1a, the fluid bearing 1 is shown in a substantially unloaded state, wherein the first bearing surface 2 is substantially spaced apart from the second bearing surface 3 and the bearing 1 is substantially not pressurized by operating fluid (so that the pressure chambers may be substantially empty). In this state, the stiffness of the bearing 1 is substantially dominated by the stiffness of the pressure chamber walls 5, 5', 6.

In Fig. 1b, the fluid bearing 1 is shown in a partially loaded state, wherein the first bearing surface 2 is substantially in contact with the second bearing surface 3 and wherein the pressure chambers 4, 4' and an area F between the first and second bearing surfaces are substantially filled with an operating fluid (not shown). In this state, the stiffness of the walls 5, 5', 6 may be substantially equal to the stiffness of the operating fluid in the pressure chambers, so that the stiffness of the bearing may be substantially doubled compared to the substantially unloaded state shown in Fig. 1a.

In Fig. 1c, the fluid bearing 1 is shown in a substantially loaded state, wherein the bearing 1, in particular the pressure chambers 4, 4', is pressurized by the operating fluid. In this state, the stiffness of the bearing 1 is substantially dominated by the stiffness of the operating fluid in the pressure chambers 4, 4'.

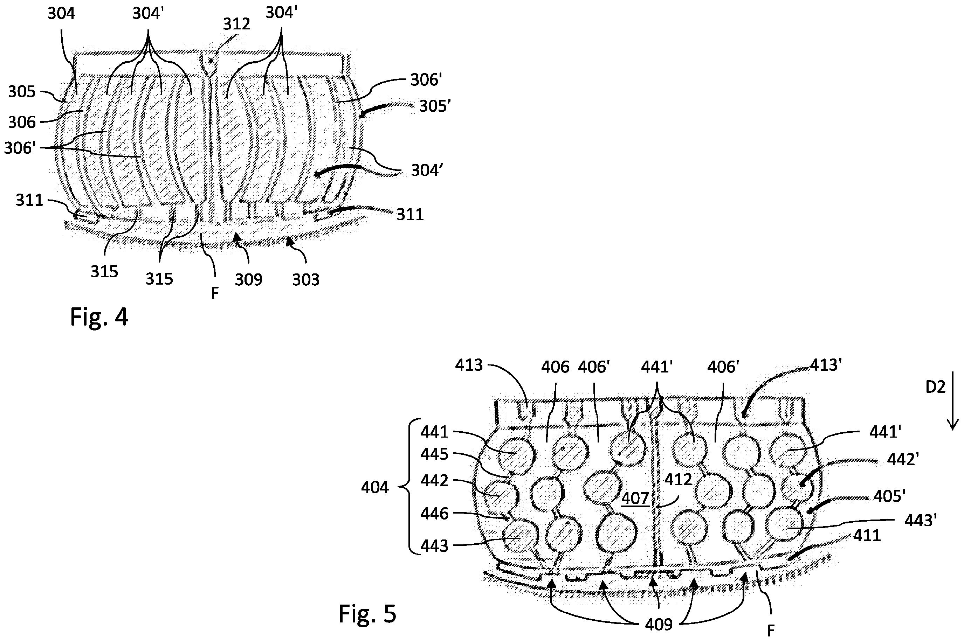

As shown in Figs. 4 and 5, the bearing may comprise more than two, preferably at least four, more preferably at least six, more preferably at least ten deformable pressure chambers 4, 4' which are preferably distributed substantially evenly throughout the bearing 1, in particular throughout a substantially deformable bearing body 7 of the bearing.

A higher number of pressure chambers can provide a more homogeneous deformability and/or a more homogeneous load balancing, in particular in the case of more complex deformations (e.g. in case of a more irregular second bearing surface).

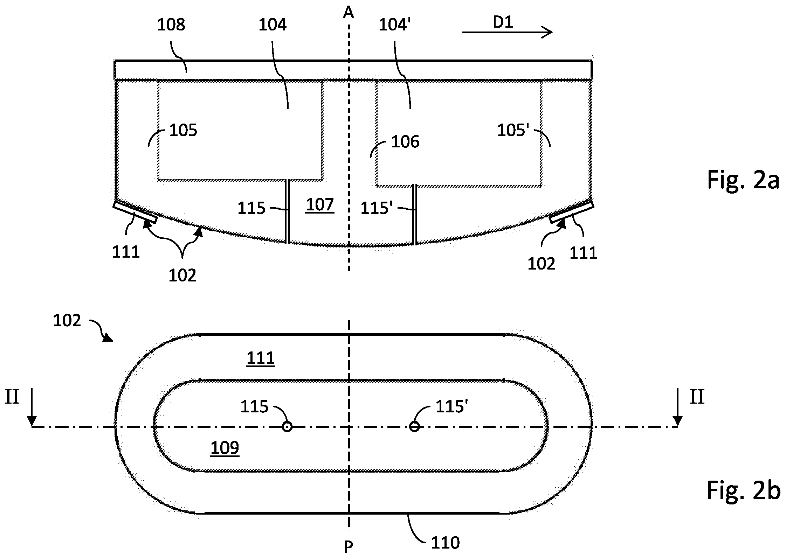

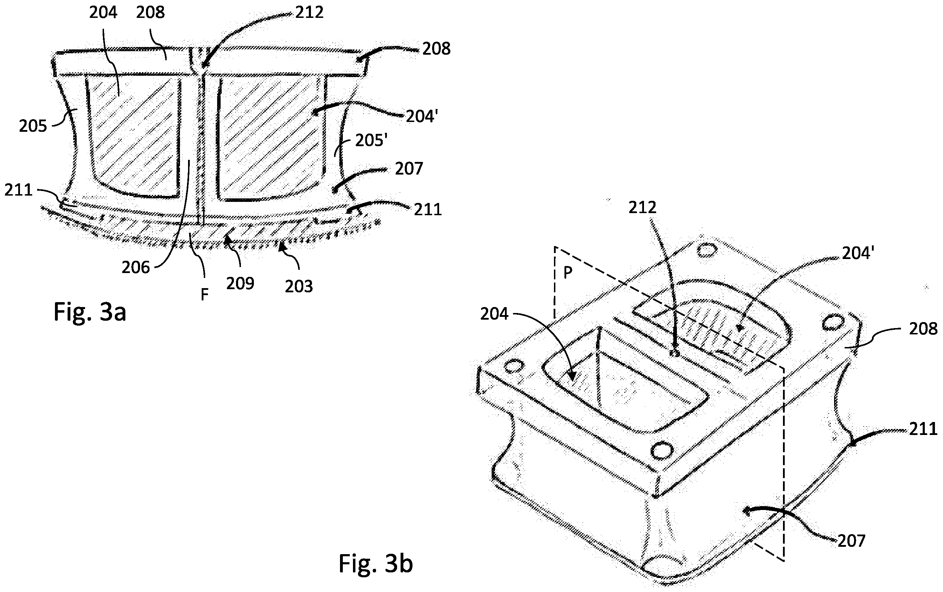

The bearing may comprise an even number of substantially deformable pressure chambers 4, 4' which are preferably distributed substantially symmetrically with respect to a central axis A (see Fig. 2a) of the bearing 1 which axis extends substantially perpendicular to the first bearing surface 2, in particular with respect to a plane P (see Figs. 2b and 3b) which includes the central axis A.

Such a configuration can provide a substantially symmetric deformability and/or a substantially symmetric load capacity of the bearing, which can be particularly advantageous in case of a similarly symmetrically varying second bearing surface.

In an embodiment, the pressure chambers 4, 4' are at least partially formed in a substantially deformable bearing body 7, wherein the bearing body 7 is substantially elastic and can have a substantially high strain capacity. The bearing body 7 can consist or e.g. be substantially, e.g. for at least 90%, composed of rubber and/or a rubber-like material, in particular a high-strain material. In yet a further embodiment a Young's Modulus of the bearing body can vary along one or more spatial dimensions, for example D1 and/or D2, of the bearing body.

Such a deformable bearing body can provide an advantageous combination of deformability and strength, in particular of the pressure chambers.

The bearing 1 may include a force distributer 8 which is configured to distribute a force received by the bearing 1 substantially evenly over the bearing 1, in particular over the pressure chambers 4, 4', wherein the force distributer 8 is preferably substantially stiff compared to the pressure chambers 4, 4', wherein the force distributer 8 preferably is made of or includes at least 50%, preferably at least 90% steel, for example stainless steel, wherein the pressure chambers 4, 4' are preferably arranged between the force distributer 8 and the first bearing surface 2.

The force distributer can help, during operation, to distribute a load over the bearing and/or to smoothen a deformation of the bearing.

The first bearing surface 2 may be substantially deformable, in particular compared to the second bearing surface 3.

Such a first bearing surface can provide improved conformance of the first bearing surface to the second bearing surface and load balancing in the bearing.

The first bearing surface 2 may include a recess 9 which is spaced apart from an outer edge 10 (see Fig. 2b) of the first bearing surface 2, wherein the recess 9 is preferably configured for receiving the operating fluid during operation, wherein preferably the deformable pressure chambers 4, 4' are each independently fluidly connected to the recess 9, for example through respective fluid connections 15, 15'.

Such a recess can provide an improved pressure profile of the operating fluid with respect to the first bearing surface, thus improving the friction reducing behavior of the bearing. Also, in such a configuration, operating fluid can advantageously flow through the recess during operation, in particular substantially independently to and from each pressure chamber.

The first bearing surface may include a substantially deformable landing plate 11.

Such a landing plate can provide improved mechanical properties of the first bearing surface, in particular improved durability and/or reduced resistance to sliding. Preferably, the deformable landing plate 11 has a substantially higher stiffness than the elastic bearing body. The landing plate can have a substantially high ratio of yield stress to Young's Modulus. Also, it is preferred that the landing plate 11 consist of or is substantially, e.g. at least 90%, composed of titanium, in particular grade 5 titanium, and/or spring steel.

In an embodiment, at least one, preferably each, of the deformable pressure chambers 4, 4' is provided with a respective external fluid inlet 13, 13' (see Fig. 5) for receiving operating fluid directly, e.g. from a fluid supply, wherein the external fluid inlet 13, 13' preferably includes a respective flow restrictor 13, 13' for restricting a flow through the external fluid inlet 13, 13'.

Operating fluid can thus advantageously be supplied more directly to the pressure chambers, e.g. for filling and possibly pressurizing said chambers while operating fluid pressure between the first and second bearing surfaces is low.

In an embodiment, as shown in Fig. 5, at least one, preferably each, of the deformable pressure chambers 4, 4' comprises a plurality of chamber compartments 41, 42, 43 which are fluidly interconnected through respective interconnecting fluid channels 45, 46, wherein the chamber compartments 41, 42, 43 are preferably distributed substantially evenly, in particular viewed along a direction D2 which is perpendicular to the first bearing surface 2.

Such pressure chambers can provide improved distribution of operating fluid pressure within the bearing.

As shown in Figs. 2a, 2b and 3b, the bearing 1 may be configured such that, when the bearing 1 is not in use and when the first bearing surface 2 is not in contact with the second bearing surface 3, the first bearing surface 2 is substantially curved, in particular being convex or concave, in particular to substantially matingly conform to a curvature, for example a minimum curvature, of the second bearing surface 3.

This can reduce a required amount of deformability of the bearing in case of a curved second bearing surface. For example, an offset deformation with respect to a theoretical non-curved first bearing surface can be taken into account, resulting e.g. in a more durable and/or compact bearing.

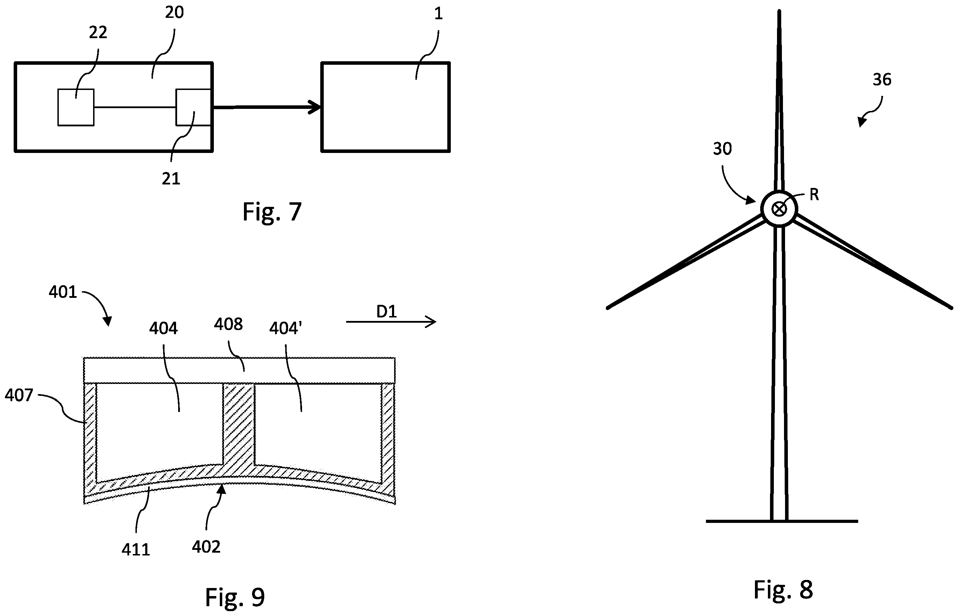

Figs. 2a, 2b and 3b show examples of the first bearing surface 2 being convex, whereas Fig. 9 shows an example of an alternative embodiment having a first bearing surface 402 that is concave. Either a convex or a concave geometry may be particularly advantageous depending on a respective geometry of the second bearing surface 3.

As shown in the diagram of Fig. 7, the fluid bearing may be provided with a fluid supply 20 for supplying the operating fluid, for example to a fluid inlet 12 and/or 13 of the bearing, and/or for pressurizing said fluid, for example at said fluid inlet 12 and/or 13, wherein the fluid supply 20 preferably includes a fluid pump 21 and preferably a reservoir 22 for holding a buffer volume of said fluid.

Such a fluid supply can advantageously provide pressurization of the fluid bearing, in particular the pressure chambers.

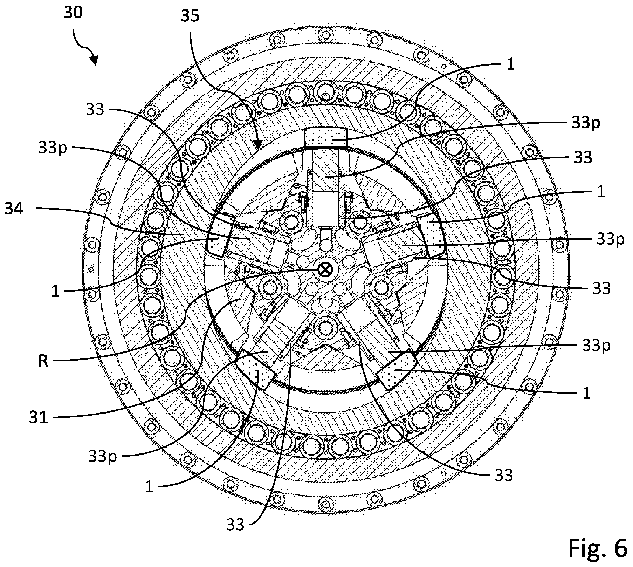

In an exemplary method, a fluid bearing 1 is provided which includes at least two deformable pressure chambers 4, 4' and a first bearing surface 2. The method further comprises connecting the first bearing surface 2 to a first machine part 31 (see Fig. 6); and supplying an operating fluid to the bearing 1, in particular to a fluid inlet 12 of the bearing, thereby pressurizing the deformable pressure chambers 4, 4' and an area F between the first and second bearing surfaces 2, 3, wherein fluid flow is allowed between each of the chambers 4, 4' on the one hand and the area F between the bearing surfaces 2, 3 on the other hand.

Such a method enables a reduction of friction, in particular sliding friction, between a first and second machine part, in particular providing a high deformability combined with a high load capacity between the first and second machine parts.

In the example shown in Fig. 6, the second machine part 34 includes the second bearing surface 35. In other examples, the second bearing surface 3 may be connected to such a second machine part.

Fig. 6 shows an exemplary pump 30 for a wind turbine. A corresponding prior art system is known from WO2018226100A1. However, in that case, a different type of bearing is applied.

The pump 30 is a multi piston pump, comprising a central part 31 and a drive ring 34 extending around the central part 31, wherein the central part 31 comprises a series of radially outward facing cylinders 33 with pistons 33p movable in said cylinders in said radial direction, relative to a central axis R, wherein the drive ring 34 engages the pistons directly or indirectly for at least forcing pistons 33p radially inward.

The drive ring 34 comprises an inward facing, non-circular, e.g. elliptic, surface 35, engaging the pistons directly or indirectly.

Between the inward facing surface 35 of the drive ring 34 and each piston at least one fluid bearing 1 is provided, in particular a fluid bearing 1 according to the present disclosure, during use driving the pistons.

Such a pump can require less maintenance and/or be more compact and/or more efficient compared to known pumps. In particular, the pump can cope with large loads while the bearings can provide appropriate deformability with respect to the non-circular surface.

The pump 30 is preferably configured such that operating fluid for the fluid bearings 1 is supplied to the fluid bearings 1 at least partially by said radially inward forcing of respective pistons 33p.

Such a configuration can provide a compact and efficient pump and wind turbine, since power for driving the fluid bearings is supplied directly by the pump which includes the fluid bearings (as opposed to, for example, a separate power supply which could require additional infrastructure, maintenance, etc.).

Fig. 8 shows an exemplary wind turbine 36, comprising a tower and a head mounted at an upper end of said tower, rotational around a head axis, wherein a propeller is mounted to said head, rotatable around a propeller axis R, wherein a hydraulic pump 30 is provided, driven by said propeller, wherein the hydraulic pump 30 is provided substantially in the propeller. The hydraulic pump is preferably a pump as shown in Fig. 6.

Such a wind turbine can require less maintenance and/or be more compact and/or more efficient compared to known wind turbines.

Thus, there is provided an improved fluid bearing, in particular a fluid bearing which combines high deformability with high load capacity.

The embodiments as disclosed are shown by way of example only and should not be construed as limiting the scope of the disclosure. The invention is only defined by the claims. For example: different materials may be used; a bearing may include any multiple number of pressure chambers; bearings may be of different shapes and sizes; deformability of the bearing and/or spatial distribution of pressure chambers may or may not be aligned with a direction of relative motion of the first and second bearing surface; the second bearing surface may or may not have a variable curvature; etc.

### List of reference signs

- 1.: Fluid bearing
- 2.: First bearing surface
- 3.: Second bearing surface
- 4.: Deformable pressure chamber
- 5.: Deformable wall
- 6.: Partition wall
- 7.: Deformable bearing body
- 8.: Force distributer
- 9.: Recess
- 10.: Outer edge of the first bearing surface
- 11.: Landing plate
- 12.: External fluid inlet
- 13.: External fluid inlet of pressure chamber
- 15.: Fluid connection between first bearing surface and pressure chamber
- 20.: Fluid supply
- 21.: Fluid pump
- 22.: Reservoir
- 30.: Pump
- 31.: Central part of pump; First machine part
- 33.: Cylinder
- 33p.: Piston
- 34.: Drive ring; Second machine part
- 35.: Inward facing surface; Second bearing surface
- 36.: Wind turbine
- 41 - 43.: Chamber compartments of pressure chamber
- 45, 46.: Interconnecting fluid channels of chamber compartments
- A.: Central axis of the bearing which axis extends substantially perpendicular to the first bearing surface
- D1.: Direction which extends parallel to the first bearing surface
- D2.: Direction which is perpendicular to the first bearing surface
- F.: Area between the first and second bearing surfaces
- P.: Plane which includes the central axis A
- R.: Propeller axis

## Claims

1. A fluid bearing (1) configured to reduce, during use, friction between a first (2) and a second (3) bearing surface, the bearing (1) comprising at least two deformable pressure chambers (4, 4'), each pressure chamber being independently fluidly connected to the first bearing surface (2) for receiving an operating fluid, wherein the chambers (4, 4') are configured, during use, to be filled with the operating fluid and to be pressurized by the operating fluid and wherein each pressure chamber (4, 4) comprise a wall with a fluid connection (15) connecting the chamber (4, 4) with the bearing surfaces (2, 3), and is configured such that by pressurizing the pressure chamber the said wall with the first bearing surface is forced towards the second bearing surface (3).

2. A fluid bearing according to any of the preceding claims, wherein:
- at least one, preferably each, of the deformable pressure chambers (4, 4') extends next to another of the deformable pressure chambers, in particular viewed in a direction (D1) which extends parallel to the first bearing surface (2) and/or
- at least two, preferably all, of the deformable pressure chambers (4, 4') are spaced apart from each other, in particular viewed in a direction (D1) which extends parallel to the first bearing surface (2).

3. A fluid bearing according to any of the preceding claims, wherein the deformable pressure chambers (4, 4') are each bordered or defined by one or more deformable walls (5, 5'), wherein the one or more deformable walls preferably include one or more deformable partition walls (6, 6') which each separate at least one pressure chamber (4) from at least one other pressure chamber (4').

4. A fluid bearing according to any of the preceding claims, wherein the bearing comprises more than two, preferably at least four, more preferably at least six, more preferably at least ten deformable pressure chambers (4, 4') which are preferably distributed substantially evenly throughout the bearing (1), in particular throughout a substantially deformable bearing body (7) of the bearing.

5. A fluid bearing according to any of the preceding claims, wherein the bearing comprises an even number of substantially deformable pressure chambers (4, 4') which are preferably distributed substantially symmetrically with respect to a central axis (A) of the bearing (1) which axis extends substantially perpendicular to the first bearing surface (2), in particular with respect to a plane (P) which includes the central axis (A).

6. A fluid bearing according to any of the preceding claims, wherein the pressure chambers (4, 4') are at least partially formed in a substantially deformable bearing body (7), wherein the bearing body (7) is preferably substantially, composed of rubber or a rubber-like material, in particular a high-strain material.

7. A fluid bearing according to any of the preceding claims, wherein the bearing (1) includes a force distributer (8) which is configured to distribute a force received by the bearing (1) substantially evenly over the bearing (1), in particular over the pressure chambers (4, 4').

8. A fluid bearing according to any of the preceding claims, wherein the first bearing surface (2):
- is substantially deformable, in particular compared to the second bearing surface (3) and/or
- includes a recess (9) which is spaced apart from an outer edge (10) of the first bearing surface (2), wherein the recess (9) is preferably configured for receiving the operating fluid during operation, wherein preferably the deformable pressure chambers (4, 4') are each independently fluidly connected to the recess (9) and/or
includes a substantially deformable landing plate (11), wherein preferably the pressure chambers (4, 4') are at least partially formed in a substantially deformable bearing body (7), and the deformable landing plate (11) has a higher stiffness than the deformable bearing body.

9. A fluid bearing according to any of the preceding claims, wherein at least one, preferably each, of the deformable pressure chambers (4, 4'):
- is provided with a respective external fluid inlet (13, 13') for receiving operating fluid directly, e.g. from a fluid supply, wherein the external fluid inlet (13, 13') preferably includes a respective flow restrictor for restricting a flow through the external fluid inlet (13, 13') and/or
- comprises a plurality of chamber compartments (41, 42, 43) which are fluidly interconnected through respective interconnecting fluid channels (45, 46), wherein the chamber compartments (41, 42, 43) are preferably distributed substantially evenly, in particular viewed along a direction (D2) which is perpendicular to the first bearing surface (2).

10. A fluid bearing according to any of the preceding claims, wherein the bearing (1) is configured such that, when the bearing (1) is not in use and when the first bearing surface (2) is not in contact with the second bearing surface (3), the first bearing surface (2) is substantially curved, in particular being convex or concave, in particular to substantially matingly conform to a curvature, for example a minimum curvature, of the second bearing surface (3).

11. A fluid bearing according to any of the preceding claims, provided with a fluid supply (20) for supplying the operating fluid, for example to a fluid inlet (12, 13) of the bearing, and/or for pressurizing said fluid, for example at said fluid inlet (12, 13), wherein the fluid supply (20) preferably includes a fluid pump (21) and preferably a reservoir (22) for holding a buffer volume of said fluid.

12. A method for reducing friction between at least a first (31) and a second (34) machine part, wherein the second machine part includes a second bearing surface (3), the method comprising:
- providing a fluid bearing (1) according to any of claims 1-11 including at least two deformable
pressure chambers (4, 4') and a first bearing surface (2), in particular a fluid bearing (1) according to any of the preceding claims;
- connecting the first bearing surface (2) to the first machine part (31); and
- supplying an operating fluid to the bearing (1), in particular to a fluid inlet (12) of the bearing, thereby pressurizing the deformable pressure chambers (4, 4') and an area (F) between the first and second bearing surfaces, wherein fluid flow is allowed between each of the chambers (4, 4') on the one hand and the area (F) between the bearing surfaces (2, 3) on the other hand through a fluid channel (15) in a wall of each of the chambers (4, 4'), wherein by said pressurizing of the pressure chambers (4, 4') the first bearing surface (2) is forced towards the second bearing surface (3).

13. A wind turbine (36), comprising a tower and a head mounted at an upper end of said tower, rotational around a head axis, wherein a propeller is mounted to said head, rotatable around a propeller axis (R), wherein a hydraulic pump (30) is provided, driven by said propeller, wherein the hydraulic pump (30) is provided substantially in the propeller,
wherein the pump (30) is a multi piston pump, comprising a central part (31) and a drive ring (34) extending around the central part (31), wherein the central part (31) comprises a series of radially outward facing cylinders (33) with pistons (33p) movable in said cylinders in said radial direction, relative to a central axis (R), wherein the drive ring (34) engages the pistons directly or indirectly for at least forcing pistons (33p) radially inward,
wherein the drive ring (34) comprises an inward facing, non-circular, e.g. elliptic, surface (35), engaging the pistons directly or indirectly,
wherein between the inward facing surface (35) of the drive ring (34) and each piston at least one fluid bearing (1) is provided according to any of claims 1-11, during use driving the pistons,
wherein the pump (30) is preferably configured such that operating fluid for the fluid bearings (1) is supplied to the fluid bearings (1) at least partially by said radially inward forcing of respective pistons (33p).

14. Pump (30) for a wind turbine (36)
wherein the pump (30) is a multi piston pump, comprising a central part (31) and a drive ring (34) extending around the central part (31), wherein the central part (31) comprises a series of radially outward facing cylinders (33) with pistons (33p) movable in said cylinders in said radial direction, relative to a central axis (R), wherein the drive ring (34) engages the pistons directly or indirectly for at least forcing pistons (33p) radially inward,
wherein the drive ring (34) comprises an inward facing, non-circular, e.g. elliptic, surface (35), engaging the pistons directly or indirectly,
wherein between the inward facing surface (35) of the drive ring (34) and each piston at least one fluid bearing (1) according to any of claims 1 - 11 is provided,
each said bearing configured to reduce, during use, friction between a first bearing surface (2) provided by or connected to the relevant piston (33p) and a second bearing surface (3) provided by the drive ring (34), the bearing (1) comprising at least two deformable pressure chambers (4, 4'), each pressure chamber (4, 4') being independently fluid connected to the first bearing surface (2) for receiving an operating fluid, the operating ring (34) during use driving the pistons (33p)
wherein the pump (30) is preferably configured such that operating fluid for the fluid bearings (1) is supplied to the fluid bearings (1) at least partially by said radially inward forcing of respective pistons (33p).

15. A substantially deformable bearing body of a fluid bearing (1) according to any of claims 1- 11, which bearing body (7) at least partially forms two deformable pressure chambers (4, 4'), wherein the bearing body (7) is provided with a first bearing surface (2), wherein each pressure chamber (4, 4') is independently fluidly connected to the first bearing surface (2), for receiving an operating fluid.

16. Method according to claim 12, wherein the operating fluid is supplied between the first bearing surface (2) and the second bearing surface (3) and into the pressure chambers (4, 4') from between the first bearing surface (2) and the second bearing surface (3).

## Patentansprüche

1. Fluidlager (1), das so eingerichtet ist, dass es während des Gebrauchs die Reibung zwischen einer ersten (2) und einer zweiten (3) Lagerfläche reduziert, wobei das Lager (1) wenigstens zwei verformbare Druckkammern (4, 4') umfasst, wobei jede Druckkammer unabhängig mit der ersten Lagerfläche (2) fluidisch verbunden ist, um ein Betriebsfluid aufzunehmen, wobei die Kammern (4, 4') so eingerichtet sind, dass sie während des Gebrauchs, mit dem Betriebsfluid gefüllt und durch das Betriebsfluid unter Druck gesetzt werden, und wobei jede Druckkammer (4, 4) eine Wand mit einer Fluidverbindung (15) umfasst, die die Kammer (4, 4) mit den Lagerflächen (2, 3) verbindet, und so eingerichtet ist, dass durch Druckbeaufschlagung der Druckkammer die Wand mit der ersten Lagerfläche in Richtung der zweiten Lagerfläche (3) gedrückt wird.

2. Fluidlager nach einem der vorhergehenden Ansprüche, wobei:
- wenigstens eine, vorzugsweise jede, der verformbaren Druckkammern (4, 4') sich neben einer anderen der verformbaren Druckkammern erstreckt, insbesondere in einer Richtung (D1) gesehen, die sich parallel zur ersten Lagerfläche (2) erstreckt, und/oder
- wenigstens zwei, vorzugsweise alle, der verformbaren Druckkammern (4, 4') voneinander beabstandet sind, insbesondere in einer Richtung (D1) gesehen, die sich parallel zur ersten Lagerfläche (2) erstreckt.

3. Fluidlager nach einem der vorhergehenden Ansprüche, wobei die verformbaren Druckkammern (4, 4') jeweils durch eine oder mehrere verformbare Wände (5, 5') begrenzt oder definiert sind, wobei die eine oder mehreren verformbaren Wände vorzugsweise eine oder mehrere verformbare Trennwände (6, 6') umfassen, die jeweils wenigstens eine Druckkammer (4) von wenigstens einer anderen Druckkammer (4') trennen.

4. Fluidlager nach einem der vorhergehenden Ansprüche, wobei das Lager mehr als zwei, vorzugsweise wenigstens vier, bevorzugter wenigstens sechs, bevorzugter wenigstens zehn verformbare Druckkammern (4, 4') umfasst, die vorzugsweise im Wesentlichen gleichmäßig über das Lager (1), insbesondere über einen im Wesentlichen verformbaren Lagerkörper (7) des Lagers, verteilt sind.

5. Fluidlager nach einem der vorhergehenden Ansprüche, wobei das Lager eine gerade Anzahl von im Wesentlichen verformbaren Druckkammern (4, 4') umfasst, die vorzugsweise im Wesentlichen symmetrisch in Bezug auf eine sich im Wesentlichen senkrecht zur ersten Lagerfläche (2) erstreckenden Mittelachse (A) des Lagers (1), insbesondere in Bezug auf eine die Mittelachse (A) einschließende Ebene (P), verteilt sind.

6. Fluidlager nach einem der vorhergehenden Ansprüche, wobei die Druckkammern (4, 4') wenigstens teilweise in einem im Wesentlichen verformbaren Lagerkörper (7) ausgebildet sind, wobei der Lagerkörper (7) vorzugsweise im Wesentlichen aus Gummi oder einem gummiartigen Material, insbesondere einem hochbelastbaren Material, besteht.

7. Fluidlager nach einem der vorhergehenden Ansprüche, wobei das Lager (1) einen Kraftverteiler (8) aufweist, der so eingerichtet ist, dass er eine von dem Lager (1) aufgenommene Kraft im Wesentlichen gleichmäßig über das Lager (1), insbesondere über die Druckkammern (4, 4'), verteilt.

8. Fluidlager nach einem der vorhergehenden Ansprüche, wobei die erste Lagerfläche (2):
- im Wesentlichen verformbar ist, insbesondere im Vergleich zu der zweiten Lagerfläche (3), und/oder
- eine Ausnehmung (9) einschließt, die von einem Außenrand (10) der ersten Lagerfläche (2) beabstandet ist, wobei die Ausnehmung (9) vorzugsweise zur Aufnahme des Betriebsfluids während des Betriebs eingerichtet ist, wobei die verformbaren Druckkammern (4, 4') vorzugsweise jeweils unabhängig fluidisch mit der Ausnehmung (9) verbunden sind und/oder eine im Wesentlichen verformbare Aufsetzplatte (11) aufweisen, wobei die Druckkammern (4, 4') vorzugsweise wenigstens teilweise in einem im Wesentlichen verformbaren Lagerkörper (7) ausgebildet sind und die verformbare Aufsetzplatte (11) eine höhere Steifigkeit aufweist als der verformbare Lagerkörper.

9. Fluidlager nach einem der vorhergehenden Ansprüche, wobei wenigstens eine, vorzugsweise jede der verformbaren Druckkammern (4, 4'):
- mit einem jeweiligen externen Fluideinlass (13, 13') zur direkten Aufnahme von Betriebsfluid, z. B. von einer Fluidversorgung, versehen ist, wobei der externe Fluideinlass (13, 13') vorzugsweise einen jeweiligen Durchflussbegrenzer zur Begrenzung eines Durchflusses durch den externen Fluideinlass (13, 13') einschließt und/oder
- mehrere Kammerfächer (41, 42, 43) aufweist, die durch jeweilige Verbindungsfluidkanäle (45, 46) fluidisch miteinander verbunden sind, wobei die Kammerfächer (41, 42, 43) vorzugsweise im Wesentlichen gleichmäßig verteilt sind, insbesondere entlang einer Richtung (D2) gesehen, die senkrecht zur ersten Lagerfläche (2) verläuft.

10. Fluidlager nach einem der vorhergehenden Ansprüche, wobei das Lager (1) so eingerichtet ist, dass, wenn das Lager (1) nicht in Gebrauch ist und wenn die erste Lagerfläche (2) nicht in Kontakt mit der zweiten Lagerfläche (3) ist, die erste Lagerfläche (2) im Wesentlichen gekrümmt ist, insbesondere konvex oder konkav ist, insbesondere um im Wesentlichen mit einer Krümmung, zum Beispiel einer minimalen Krümmung, der zweiten Lagerfläche (3) passgenau übereinzustimmen.

11. Fluidlager nach einem der vorhergehenden Ansprüche, versehen mit einer Fluidversorgung (20) zum Zuführen des Betriebsfluids, zum Beispiel zu einem Fluideinlass (12, 13) des Lagers, und/oder zur Druckbeaufschlagung des Fluids, zum Beispiel an dem Fluideinlass (12, 13), wobei die Fluidversorgung (20) vorzugsweise eine Fluidpumpe (21) und vorzugsweise einen Speicher (22) zur Aufnahme eines Puffervolumens des Fluids einschließt.

12. Verfahren zur Verringerung der Reibung zwischen wenigstens einem ersten (31) und einem zweiten (34) Maschinenteil, wobei das zweite Maschinenteil eine zweite Lagerfläche (3) aufweist, wobei das Verfahren umfasst:
- Bereitstellen eines Fluidlagers (1) nach einem der Ansprüche 1 bis 11 mit wenigstens zwei verformbaren Druckkammern (4, 4') und einer ersten Lagerfläche (2), insbesondere eines Fluidlagers (1) nach einem der vorhergehenden Ansprüche;
- Verbinden der ersten Lagerfläche (2) mit dem ersten Maschinenteil (31); und
- Zuführen eines Betriebsfluids zu dem Lager (1), insbesondere zu einem Fluideinlass (12) des Lagers, und dadurch Druckbeaufschlagung der verformbaren Druckkammern (4, 4') und ein Bereich (F) zwischen der ersten und der zweiten Lagerfläche, wobei ein Fluidfluss zwischen jeder der Kammern (4, 4') einerseits und dem Bereich (F) zwischen den Lagerflächen (2, 3) andererseits durch einen Fluidkanal (15) in einer Wand jeder der Kammern (4, 4') ermöglicht wird, wobei durch die Druckbeaufschlagung der Druckkammern (4, 4') die erste Lagerfläche (2) in Richtung der zweiten Lagerfläche (3) gedrückt wird.

13. Windturbine (36), die einen Turm und einen Kopf umfasst, der an einem oberen Ende des Turms montiert ist und sich um eine Kopfachse dreht, wobei ein Propeller an dem Kopf montiert ist, der sich um eine Propellerachse (R) drehen kann, wobei eine Hydraulikpumpe (30) bereitgestellt ist, die von dem Propeller angetrieben wird, wobei die Hydraulikpumpe (30) im Wesentlichen in dem Propeller bereitgestellt ist,
wobei die Pumpe (30) eine Mehrkolbenpumpe ist, die einen Mittelteil (31) und einen Antriebsring (34) umfasst, der sich um den Mittelteil (31) herum erstreckt, wobei der Mittelteil (31) eine Reihe von radial nach außen gerichteten Zylindern (33) mit Kolben (33p) umfasst, die in den Zylindern in der radialen Richtung relativ zu einer Mittelachse (R) beweglich sind, wobei der Antriebsring (34) direkt oder indirekt mit den Kolben in Eingriff steht, um die Kolben (33p) wenigstens radial nach innen zu drücken,
wobei der Antriebsring (34) eine nach innen gerichtete, nicht kreisförmige, z. B. elliptische Fläche (35) umfasst, die direkt oder indirekt mit den Kolben in Eingriff steht,
wobei zwischen der nach innen gerichteten Fläche (35) des Antriebsrings (34) und jedem Kolben wenigstens ein Fluidlager (1) nach einem der Ansprüche 1 bis 11 bereitgestellt ist, das während des Gebrauchs die Kolben antreibt,
wobei die Pumpe (30) vorzugsweise so eingerichtet ist, dass Betriebsfluid für die Fluidlager (1) den Fluidlagern (1) wenigstens teilweise durch das radial nach innen gerichtete Drücken der jeweiligen Kolben (33p) zugeführt wird.

14. Pumpe (30) für eine Windturbine (36), wobei die Pumpe (30) eine Mehrkolbenpumpe ist, die einen Mittelteil (31) und einen Antriebsring (34) umfasst, der sich um den Mittelteil (31) herum erstreckt, wobei der Mittelteil (31) eine Reihe von radial nach außen gerichteten Zylindern (33) mit Kolben (33p) umfasst, die in den Zylindern in der radialen Richtung relativ zu einer Mittelachse (R) beweglich sind, wobei der Antriebsring (34) direkt oder indirekt mit den Kolben in Eingriff steht, um wenigstens die Kolben (33p) radial nach innen zu drücken,
wobei der Antriebsring (34) eine nach innen gerichtete, nicht kreisförmige, z. B. elliptische Fläche (35) umfasst, die direkt oder indirekt mit den Kolben in Eingriff steht,
wobei zwischen der nach innen gerichteten Fläche (35) des Antriebsrings (34) und jedem Kolben wenigstens ein Fluidlager (1) nach einem der Ansprüche 1 bis 11 bereitgestellt ist, wobei jedes Lager so eingerichtet ist, dass es während des Gebrauchs die Reibung zwischen einer ersten Lagerfläche (2), die von dem betreffenden Kolben (33p) bereitgestellt wird oder mit diesem verbunden ist, und einer zweiten Lagerfläche (3), die von dem Antriebsring (34) bereitgestellt wird, reduziert, das Lager (1) wenigstens zwei verformbare Druckkammern (4, 4') umfasst, wobei jede Druckkammer (4, 4') unabhängig mit der ersten Lagerfläche (2) zur Aufnahme eines Betriebsfluids fluidisch verbunden ist, wobei der Betätigungsring (34) während des Gebrauchs die Kolben (33p) antreibt
wobei die Pumpe (30) vorzugsweise so eingerichtet ist, dass Betriebsfluid für die Fluidlager (1) den Fluidlagern (1) wenigstens teilweise durch das radial nach innen gerichtete Drücken der jeweiligen Kolben (33p) zugeführt wird.

15. Im Wesentlichen verformbarer Lagerkörper eines Fluidlagers (1) nach einem der Ansprüche 1 bis 11, wobei der Lagerkörper (7) wenigstens teilweise zwei verformbare Druckkammern (4, 4') bildet, wobei der Lagerkörper (7) mit einer ersten Lagerfläche (2) versehen ist, wobei jede Druckkammer (4, 4') unabhängig mit der ersten Lagerfläche (2) fluidisch verbunden ist, um ein Betriebsfluid aufzunehmen.

16. Verfahren nach Anspruch 12, wobei das Betriebsfluid zwischen der ersten Lagerfläche (2) und der zweiten Lagerfläche (3) und in die Druckkammern (4, 4') zwischen der ersten Lagerfläche (2) und der zweiten Lagerfläche (3) zugeführt wird.

## Revendications

1. Palier fluide (1) configuré pour réduire, pendant l'utilisation, la friction entre une première (2) et une seconde (3) surface de palier, le palier (1) comprenant au moins deux chambres de pression (4, 4') déformables, chaque chambre de pression étant raccordée, de manière indépendamment fluidique, à la première surface de palier (2) pour recevoir un fluide de travail, dans lequel les chambres (4, 4') sont configurées, pendant l'utilisation, pour être remplies avec le fluide de travail et être mises sous pression par le fluide de travail et dans lequel chaque chambre de pression (4, 4) comprend une paroi avec un raccordement de fluide (15) qui raccorde la chambre (4, 4) avec les surfaces de palier (2, 3) et est configurée de sorte qu'en mettant la chambre de pression sous pression, ladite paroi avec la première surface de palier est forcée vers la seconde surface de palier (3).

2. Palier fluide selon l'une quelconque des revendications précédentes, dans lequel :
- au moins l'une, de préférence chacune, des chambres de pression (4, 4') déformables s'étend à côté d'une autre des chambres de pression déformables, en particulier, observée dans une direction (D1) qui s'étend parallèlement à la première surface de palier (2), et/ou
- au moins deux, de préférence toutes les chambres de pression (4, 4') déformables sont espacées les unes des autres, en particulier observées dans une direction (D1) qui s'étend parallèlement à la première surface de palier (2).

3. Palier fluide selon l'une quelconque des revendications précédentes, dans lequel les chambres de pression (4, 4') déformables sont chacune bordées ou définies par une ou plusieurs parois (5, 5') déformables, dans lequel les une ou plusieurs parois déformables comprennent de préférence une ou plusieurs parois de séparation (6, 6') déformables qui séparent chacune au moins une chambre de pression (4) d'au moins une autre chambre de pression (4').

4. Palier fluide selon l'une quelconque des revendications précédentes, dans lequel le palier comprend plus de deux, de préférence au moins quatre, encore de préférence au moins six, encore de préférence au moins dix chambres de pression (4, 4') déformables qui sont de préférence réparties de manière sensiblement régulière sur tout le palier (1), en particulier sur tout un corps de palier (7) sensiblement déformable du palier.

5. Palier fluide selon l'une quelconque des revendications précédentes, dans lequel le palier comprend un nombre pair de chambres de pression (4, 4') sensiblement déformables qui sont de préférence réparties de manière sensiblement symétrique par rapport à un axe central (A) du palier (1), lequel axe s'étend de manière sensiblement perpendiculaire par rapport à la première surface de palier (2), en particulier par rapport à un plan (P) qui comprend l'axe central (A).

6. Palier fluide selon l'une quelconque des revendications précédentes, dans lequel les chambres de pression (4, 4') sont au moins partiellement formées dans un corps de palier (7) sensiblement déformable, dans lequel le corps de palier (7) est de préférence sensiblement composé de caoutchouc ou d'un matériau de type caoutchouc, en particulier un matériau à forte contrainte.

7. Palier fluide selon l'une quelconque des revendications précédentes, dans lequel le palier (1) comprend un répartiteur de force (8) qui est configuré pour répartir une force reçue par le palier (1) sensiblement régulièrement sur le palier (1), en particulier sur les chambres de pression (4, 4').

8. Palier fluide selon l'une quelconque des revendications précédentes, dans lequel la première surface de palier (2) :
- est sensiblement déformable, en particulier par rapport à la seconde surface de palier (3), et/ou
- comprend un évidement (9) qui est espacé d'un bord externe (10) de la première surface de palier (2), dans lequel l'évidement (9) est de préférence configuré pour recevoir le fluide de travail pendant le fonctionnement, dans lequel de préférence les chambres de pression (4, 4') déformables sont chacune raccordées de manière indépendamment fluidique à l'évidement (9), et/ou
comprend une plaque de réception (11) sensiblement déformable, dans lequel de préférence les chambres de pression (4, 4') sont au moins partiellement formées dans un corps de palier (7) sensiblement déformable, et la plaque de réception (11) déformable a une plus grande rigidité que le corps de palier déformable.

9. Palier fluide selon l'une quelconque des revendications précédentes, dans lequel au moins l'une, de préférence chacune des chambres de pression (4, 4') déformables :
- est prévue avec une entrée de fluide externe (13, 13') respective pour recevoir directement le fluide de travail, par exemple d'une alimentation en fluide, dans lequel l'entrée de fluide externe (13, 13') comprend de préférence un limiteur d'écoulement respectif pour limiter un écoulement à travers l'entrée de fluide externe (13, 13'), et/ou
- comprend une pluralité de compartiments de chambre (41, 42, 43) qui sont interconnectés, de manière fluidique, par le biais de canaux de fluide d'interconnexion (45, 46) respectifs, dans lequel les compartiments de chambre (41, 42, 43) sont de préférence répartis de manière sensiblement régulière, en particulier, observés le long d'une direction (D2) qui est perpendiculaire à la première surface de palier (2).

10. Palier fluide selon l'une quelconque des revendications précédentes, dans lequel le palier (1) est configuré de sorte que, lorsque le palier (1) n'est pas utilisé, et lorsque la première surface de palier (2) n'est pas en contact avec la seconde surface de palier (3), la première surface de palier (2) est sensiblement courbée, en particulier convexe ou concave, en particulier pour épouser parfaitement une courbure, par exemple une courbure minimum, de la seconde surface de palier (3).

11. Palier fluide selon l'une quelconque des revendications précédentes, prévu avec une alimentation en fluide (20) pour amener le fluide de travail, par exemple, à une entrée de fluide (12, 13) du palier et/ou pour mettre sous pression ledit fluide, par exemple au niveau de ladite entrée de fluide (12, 13), dans lequel l'alimentation en fluide (20) comprend de préférence une pompe à fluide (21) et de préférence un réservoir (22) pour contenir un volume tampon dudit fluide.

12. Procédé pour réduire la friction entre au moins une première (31) et une seconde (34) partie de machine, dans lequel la seconde partie de machine comprend une seconde surface de palier (3), le procédé comprenant les étapes consistant à :
- prévoir un palier fluide (1) selon l'une quelconque des revendications 1 à 11, comprenant au moins deux chambres de pression (4, 4') déformables et une premier surface de palier (2), en particulier un palier fluide (1) selon l'une quelconque des revendications précédentes ;
- raccorder la première surface de palier (2) à la première partie de machine (31) ; et
- amener un fluide de travail au palier (1), en particulier à une entrée de fluide (12) du palier, mettant ainsi sous pression les chambres de pression (4, 4') déformables et une zone (F) entre les première et seconde surfaces de palier, dans lequel l'écoulement de fluide est autorisé entre chacune des chambres (4, 4') d'une part et la zone (F) entre les surfaces de palier (2, 3) d'autre part, par un canal de fluide (15) dans une paroi de chacune des chambres (4, 4'), dans lequel grâce à ladite mise sous pression des chambres de pression (4, 4'), la première surface de palier (2) est forcée vers la seconde surface de palier (3).

13. Éolienne (36) comprenant une tour et une tête montée au niveau d'une extrémité supérieure de ladite tour, en rotation autour d'un axe de tête, dans laquelle l'hélice est montée sur ladite tête de manière rotative autour d'un axe d'hélice (R), dans laquelle on prévoit une pompe hydraulique (30) entraînée par ladite hélice, dans laquelle la pompe hydraulique (30) est prévue sensiblement dans l'hélice,
dans laquelle la pompe (30) est une pompe à plusieurs pistons, comprenant une partie centrale (31) et un anneau d'entraînement (34) s'étendant autour de la partie centrale (31), dans laquelle la partie centrale (31) comprend une série de cylindres (33) orientés radialement vers l'extérieur avec des pistons (33p) mobiles dans lesdits cylindres dans ladite direction radiale, par rapport à un axe central (R), dans laquelle l'anneau d'entraînement (34) met en prise les pistons directement ou indirectement pour au moins forcer les pistons (33p) radialement vers l'intérieur,
dans laquelle l'anneau d'entraînement (34) comprend une surface non circulaire (35) par exemple elliptique orientée vers l'intérieur mettant en prise les pistons directement ou indirectement,
dans laquelle entre la surface orientée vers l'intérieur (35) de l'anneau d'entraînement (34) et chaque piston, on prévoit au moins un palier fluide (1) selon l'une quelconque des revendications 1 à 11, pendant l'utilisation, qui entraîne les pistons,
dans laquelle la pompe (30) est de préférence configurée de sorte que le fluide de travail pour les paliers fluides (1) est amené aux paliers fluides (1) au moins partiellement par ledit forçage radialement vers l'intérieur des pistons (33p) respectifs.

14. Pompe (30) pour une éolienne (36),
dans laquelle la pompe (30) est une pompe à plusieurs pistons, comprenant une partie centrale (31) et un anneau d'entraînement (34) s'étendant autour de la partie centrale (31), dans laquelle la partie centrale (31) comprend une série de cylindres orientés radialement vers l'extérieur (33) avec des pistons (33p) mobiles dans lesdits cylindres dans ladite direction radiale, par rapport à un axe central (R), dans laquelle l'anneau d'entraînement (34) met en prise les pistons directement ou indirectement pour au moins forcer les pistons (33p) radialement vers l'intérieur,
dans laquelle l'anneau d'entraînement (34) comprend une surface non circulaire (35) par exemple elliptique orientée vers l'intérieur mettant en prise les pistons directement ou indirectement,
dans laquelle entre la surface orientée vers l'intérieur (35) de l'anneau d'entraînement (34) et chaque piston, on prévoit au moins un palier fluide (1) selon l'une quelconque des revendications 1 à 11, chacun desdits paliers étant configuré pour réduire, pendant l'utilisation, la friction entre une première surface de palier (2) prévue par ou raccordée au piston (33p) correspondant et une seconde surface de palier (3) prévue par l'anneau d'entraînement (34), le palier (1) comprenant au moins deux chambres de pression (4, 4') déformables, chaque chambre de pression (4, 4') étant raccordée, de manière indépendamment fluidique, à la première surface de palier (2) pour recevoir un fluide de travail, l'anneau d'actionnement (34), pendant l'utilisation, entraînant les pistons (33p),
dans laquelle la pompe (30) est de préférence configurée de sorte que le fluide de travail pour les paliers fluides (1) est fourni aux paliers fluides (1) au moins partiellement par ledit forçage radialement interne des pistons (33p) respectifs.

15. Corps de palier sensiblement déformable d'un palier fluide (1) selon l'une quelconque des revendications 1 à 11, lequel corps de palier (7) forme, au moins partiellement, deux chambres de pression (4, 4') déformables, dans lequel le corps de palier (7) est prévu avec une première surface de palier (2), dans lequel chaque chambre de pression (4, 4') est raccordée, de manière indépendamment fluidique, à la première surface de palier (2) pour recevoir un fluide de travail.

16. Procédé selon la revendication 12, dans lequel le fluide de travail est amené entre la première surface de palier (2) et la seconde surface de palier (3) et dans les chambres de pression (4, 4') depuis l'endroit situé entre la première surface de palier (2) et la seconde surface de palier (3).
